# FASCICULE DE BREVET EUROPEEN

(11) **EP 0 641 597 B1**
(45) Date de publication et mention de la délivrance du brevet: **06.08.1997**
(21) Numéro de dépôt: 94401937.1
(22) Date de dépôt: 31.08.1994
(51) Int. Cl.: B01J 21/06

(54) **Catalyseurs à base d'oxydes métalliques à dispersion élevée comprenant notamment de la zircone**
Katalysatoren auf der Basis von hochdispergierten Metalloxyden enthaltende Zirkoniumdioxid
Catalyst based on highly dispersed metal oxydes comprising zirconia

(30) Priorité: 03.09.1993 FR 9310535
(43) Date de publication de la demande: 08.03.1995
(73) Titulaire: ELF AQUITAINE, 92400 Courbevoie (FR)
(72) Inventeur: Afanasiev, Pavel, F-69100 Villeurbanne (FR); Boulinguiez, Martine, F-69100 Villeurbanne (FR); Breysse, Michèle, F-69300 Caluire (FR); Geantet, Christophe, F-69006 Lyon (FR); des Courieres, Thierry, F-69007 Lyon (FR)
(74) Mandataire: Boillot, Marc

(56) Documents cités:
- EP-A- 0 208 102
- EP-A- 0 382 049
- EP-A- 0 460 738
- EP-A- 0 495 534

## Description

La présente invention concerne des catalyseurs thermiquement stables à base d'oxydes métalliques à forte dispersion de la phase active, de surface spécifique améliorée, leur mode de fabrication et leurs applications dans les procédés de traitement catalytique des composés hydrocarbonés et autres. Elle concerne plus particulièrement les catalyseurs formés à partir de supports contenant de la zircone.

Un très grand nombre de procédés catalytiques nécessite l'utilisation de catalyseur comprenant des supports de grande surface spécifique, particulièrement recherchés dans les procédés d'oxydation et les procédés d'hydrotraitement, sur lesquels sont déposés un maximum de phase active. Les catalyseurs communément mis en oeuvre à l'échelle industrielle sont généralement constitués de supports comprenant un ou plusieurs oxydes réfractaires de métaux tels que le zirconium, l'aluminium, le silicium et le titane, la phase active étant constituée de sulfures ou d'oxydes de métaux de transition. Ces catalyseurs sont toujours préparés en au moins deux étapes, une première étape de formation du support et une seconde étape d'imprégnation de ce dernier par la phase active, les traitements ultérieurs de calcination et de sulfuration visant à transformer le métal déposé sous forme de sel en oxydes et en sulfures. Du mode de fabrication du support va dépendre sa surface spécifique et sa porosité. La dispersion de la phase active sur ce support se fera plus ou moins bien selon que la surface spécifique et la porosité du support sont plus ou moins grandes et selon les conditions expérimentales d'imprégnation de celui-ci. En particulier, l'interaction du sel métallique avec le support est directement liée aux propriétés acido-basiques du support. Ainsi, lorsque tous les sites du support accessibles sont occupés par l'ion métallique actif du sel présent dans la solution d'imprégnation, l'ion métallique restant en solution ne peut plus se déposer sous une forme active, régulièrement dispersée, sur le support. Dans ces catalyseurs de type conventionnel, la quantité de phase active est donc très vite limitée par la qualité du support, c'est-à-dire sa capacité à absorber des ions métalliques actifs, exprimée par le nombre d'atomes métalliques déposés par unité de surface, ce qui a été confirmé par de nombreux auteurs et mis en évidence expérimentalement par des moyens d'analyse tels que la spectroscopie UV et par Spectroscopie de Photoélectrons X (XPS ou X Ray Photoelectrons Spectroscopy).

Comme l'efficacité d'un catalyseur dépend non seulement des conditions de mise en oeuvre du procédé catalytique mais aussi de son activité, directement liée à la quantité de phase active présente sur le support, de nombreuses méthodes de préparation ont été proposées soit pour augmenter la surface du support, soit pour modifier son état de surface.

Pour certains supports, notamment ceux contenant de la zircone, il n'a pas été possible d'obtenir une surface spécifique aussi élevée que celle des supports les plus usités contenant de l'alumine. En outre, les supports à base de zircone se sont révélés être peu stables thermiquement et hydrothermiquement. En présence de dopants structuraux tels que l'yttrium, le lanthane ou le silicium, cette stabilité thermique a été améliorée mais encore insuffisamment.

Pour résoudre ce problème d'instabilité thermique de la zircone et pour améliorer la surface spécifique des catalyseurs contenant de la zircone la demanderesse a développé une synthèse particulière des supports contenant des oxydes métalliques réfractaires, décrite dans sa demande de brevet française 2.661.169 du 20 avril 1990. Il s'agit de chauffer un sel métallique dans un milieu de sel fondu constitué d'au moins un sel alcalin à effet oxydant à une température supérieure à celle de l'eutectique. Par ce procédé, la demanderesse a constaté qu'il était possible de synthétiser des supports à base d'oxydes de métaux des groupes III et IV du tableau de Mendéléïev, et plus particulièrement des supports à base d'oxydes réfractaires tels que les oxydes de zirconium, d'aluminium, de silicium et de titane, ces oxydes précipitant dans le milieu sel fondu.

Pour améliorer encore la surface spécifique de ces supports, la demanderesse a eu l'idée de préparer des supports composés d'oxydes mixtes et a constaté que les atomes métalliques se répartissaient de façon homogène et régulière dans le support pour une amélioration non négligeable de sa surface spécifique. Bien entendu, une phase métallique catalytiquement active était ultérieurement déposée sur ces supports de façon conventionnelle.

Continuant ses travaux sur les catalyseurs dont le support est obtenu par la méthode dite des sels fondus, la demanderesse a été amené à tester plusieurs combinaisons possible d'oxydes de métaux avec de la zircone et s'est aperçue que certaines combinaisons, notamment des combinaisons avec des sels de métaux catalytiquement actifs permettent d'augmenter de façon tout à fait inattendue la surface spécifique des supports à base de zircone. De plus, elle a découvert que ces supports devenus actifs de par leur constitution et thermiquement stables peuvent être utilisés directement comme catalyseur.

La présente invention vise donc des catalyseurs d'oxydation et d'hydrotraitement d'hydrocarbures thermiquement stables comprenant des oxydes de zirconium de surface spécifique plus élevée que celle connue par l'homme du métier pour une meilleure dispersion des sites actifs.

La surface spécifique de ces catalyseurs est mesurée par la méthode BET correspondant à la norme ASTM D3663.

La présente invention a donc pour objet un catalyseur thermiquement stable comprenant au moins un oxyde de zirconium caractérisé en ce qu'il est constitué pour au moins 85 % en poids par un support de surface spécifique supérieure ou égale à 150 m²/g contenant de 60 à 99% en poids d'au moins un oxyde de zirconium et de 40 à 1% en poids d'au moins un oxyde métallique d'au moins un métal (Me) choisi dans le groupe constitué par les métaux des groupes V, VI et VII, l'uranium et les métaux nobles tels que le ruthénium, l'osmium, le rhodium, l'iridium, et éventuellement au moins un des éléments phosphore, arsenic et soufre, et en ce que le support est obtenu en une seule phase de réaction qui consiste :
**i)** à mélanger le mélange de sels de zirconium et d'au moins un autre métal dans une composition eutectique de nitrates ou de sulfates alcalins ;
**ii)** à déshydrater le mélange entre 80 et 200°C pendant de 30 minutes à 3 heures sous atmosphère inerte ;
**iii)** puis à maintenir le mélange à une température comprise entre 250 et 550°C pendant de 30 minutes à 5 heures ;
**iiii)** et enfin, à laver à l'eau les sels oxydants solubles et, simultanément, à isoler le support ainsi formé par filtration des cristallites le composant.

Dans un mode préféré de l'invention, le support dudit catalyseur selon l'invention peut comprendre avantageusement un rapport atomique métal/zirconium (Me/Zr) compris entre 0,02 et 0,20.

Contrairement aux métaux revendiqués dans les mélanges d'oxydes déjà obtenus par la technique des sels fondus, les métaux incorporés dans les cristallites du support de la présente invention, à côté des oxydes de zirconium, sont généralement d'acidité plus faible. Ils jouent le rôle d'inhibiteur de croissance des cristallites de zircone en coprécipitant avec elles. Cette coprécipitation inattendue diminue la taille des cristaux mais favorise l'obtention d'une surface spécifique plus élevée pour le catalyseur final que celle escomptée si le support avait été préparé par la technique des sels fondus connus par l'homme du métier à partir de sels de zirconium et d'yttrium, puis imprégné par au moins une phase active d'un de ces métaux.

On a ainsi observé que ces métaux du groupe constitué par les métaux des groupes V, VI et VII, les métaux nobles tels que le ruthénium, l'osmium, le rhodium, l'iridium et l'uranium, et les éléments phosphore, arsenic et soufre, contrairement à ceux utilisés comme structurant de la zircone tel que l'yttrium, ne se substituaient pas à un des atomes de zirconium de la solution solide stable Zr₍₁₋ₓ₎MeₓO₂ mais viennent se greffer à la surface de la zircone lors de son processus de nucléation et de croissance cristalline pour former des espèces telles que représentées par la formule I ci-après

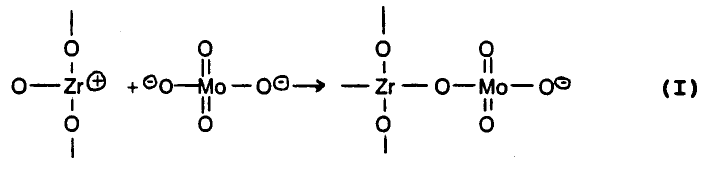

En outre, on a constaté que la présence de ces métaux auprès de la zircone dans le mélange eutectique favorisait de façon imprévisible l'ancrage à la surface de la zircone d'un deuxième métal choisi dans le groupe constitué par le fer, le cobalt, le nickel et le bismuth, lorsque celui-ci est introduit de façon préférée sous forme sulfate ou nitrate dans le mélange eutectique. Le support comprend alors conjointement à l'oxyde de zirconium au moins un oxyde mixte de type oxométallate métallique, l'oxométallate correspondant au premier métal, l'espèce métallique au deuxième métal.

De plus, lorsque la zircone était seule en mélange avec un oxyde métallique simple nécessaire à l'invention, c'est-à-dire un métal du groupe constitué par les métaux des groupes V, VI et VII, les métaux nobles tels que le ruthénium, l'osmium, le rhodium, l'iridium et l'uranium et les éléments phosphore, arsenic et soufre, on a constaté que le rapport atomique métal/zirconium (Me/Zr) était compris entre 0,02 et 0,1 et de préférence compris entre 0,05 et 0,08.

De préférence, dans ces supports, les oxydes de zirconium sont combinés à des oxydes métalliques simples ou mixtes obtenus à partir de métaux choisis dans le groupe constitué par le molybdène, le vanadium, le tungstène, le niobium et le chrome.

Dans le cadre de la présente invention, l'oxyde mixte préféré associé aux oxydes de zirconium est un oxométallate choisi dans le groupe constitué par le molybdate, le vanadate, le niobate, le chromate et le tungstate, d'au moins un métal choisi dans le groupe constitué par le fer, le cobalt, le nickel et le bismuth.

En effet, on a constaté que la présence auprès de la zircone, de molybdène, de vanadium, de chrome, de niobium ou de tungstène favorise de façon imprévisible la coprécipitation en milieu sels fondus de cristaux de zircone avec les métaux fer, cobalt, nickel et bismuth, alors qu'en leur absence, la zircone et ces métaux fer, cobalt, nickel et bismuth précipitent séparément.

Dans un mode préféré de la présente invention, comme le support est constitué de ces cristallites catalytiquement actifs, il peut jouer avantageusement le rôle de catalyseur en lui-même. Un tel support formé de cristallites catalytiquement actifs est particulièrement avantageux en tant que catalyseur en ce qu'il est stable thermiquement et qu'il combine une surface spécifique très élevée avec une teneur importante en métaux catalytiquement actifs.

L'activité de ce support pourra encore être améliorée par l'imprégnation à la surface du dit support de 0 à 15% en poids d'au moins un métal choisi dans le groupe constitué par les métaux des groupes V, VI et VII, les métaux nobles tels que le ruthénium, l'osmium, le rhodium, l'iridium et l'uranium, les métaux de transition et les éléments phosphore, arsenic et soufre, pris seuls ou en mélange.

Dans un mode plus favorable de l'invention, la quantité de métal catalytiquement actif dans le catalyseur est optimisée pour une activité optimale du catalyseur au cours de la réaction chimique envisagée ; ainsi le rapport atomique métal/zirconium maximal accessible sera de 0,25. Les métaux préférés selon l'invention, imprégnés en surface sont choisis dans le groupe constitué par le molybdène, le vanadium et le tungstène, les métaux de transitions et le bismuth.

Parmi les applications possible des catalyseurs selon l'invention, on préférera les utiliser dans les procédés de traitement des hydrocarbures, et plus particulièrement les procédés d'oxydation et d'hydrotraitement.

Les exemples donnés ci-après visent à illustrer l'invention mais non pas en limiter la portée.

### EXEMPLE I:

Le présent exemple vise à illustrer la supériorité des catalyseurs selon la présente invention comparés à ceux obtenus par les techniques connues par l'Homme du métier au regard de leur surface spécifique et de leur stabilité thermique.

Ainsi plusieurs échantillons ont été préparés:
- l'échantillon 1 est un catalyseur de type classique : il a été préparé par imprégnation à sec d'un support d'alumine gamma (Al₂O₃γ) de surface spécifique égale à 250 m2/g par une solution d'heptamolybdate d'ammonium. Après calcination, le catalyseur contient 9,3% en poids de molybdène ;
- l'échantillon 2 est une zircone préparée selon la méthode décrite dans la demande de brevet française 2.661.169 ;
- l'échantillon 3 est un mélange d'oxydes de zirconium et d'yttrium préparé selon la méthode décrite dans la demande de brevet française 2.661.169 ; pour obtenir cet échantillon, on ajoute un excès 10 fois molaire du sel eutectique de nitrate de sodium et de nitrate de potassium à l'oxychlorure de zirconium et au chlorure d'yttrium, puis on maintient le mélange à 500°C pendant 2 heures ;
- l'échantillon 4 est un catalyseur selon l'invention: il est obtenu en broyant simultanément 10 g d'oxychlorure de zirconium vendu par FLUKA avec 0,63 g d'heptamolybdate d'ammonium vendu par MERCK, puis en ajoutant au mélange un excès 10 fois molaire du mélange eutectique nitrate de sodium/nitrate de potassium, ensuite en déshydratant l'ensemble sous atmosphère inerte d'azote à 150°C pendant 2 heures et enfin en le chauffant à 500°C pendant 2 heures. Après refroidissement, le bain est lavé à l'eau pour dissoudre et éliminer les sels alcalins, puis l'ensemble est filtré et les cristaux de l'échantillon 4 sont récupérés. On observe par la spectrométrie UV une bonne dispersion du molybdène sous forme peu polymérisée, caractérisée par une bande UV entre 250 et 500 nm avec un maximum à 300 nm.
- l'échantillon 5 est un catalyseur vanadium /zircone selon l'invention préparé comme l'échantillon 4 mais en substituant à l'heptamolybdate 2,72 g d'acétylacétonate de vanadium (MERCK). Par spectrométrie UV on observe la même bande d'absorption caractéristique de l'excellente dispersion du vanadium à la surface de la zircone.
- l'échantillon 6 est un catalyseur tungstène/zircone selon l'invention préparé comme les échantillons 4 et 5 mais avec 0,74 g de métatungstate d'ammonium (ALDRICHT). La même bande UV apparaît caractéristique de la bonne dispersion du tungstène à la surface de la zircone.

Les surfaces spécifiques de ces six échantillons ont été mesurées selon la méthode BET (norme ASTM D3663) après préparation puis après qu'ils aient été calcinés à 600°C et à 800°C. Les résultats sont rassemblés dans le tableau 1 ci-après.

**TABLEAU I**

| **ECHANTILLON** | **% en poids de métal** | **Surface Spécifique** (m²/g) | | |
|---|---|---|---|---|
| | | **après préparation** | **après calcination** | |
| | | | **à 600°C** | **à 800°C** |
| 1 | 9.3 | 210 | - | - |
| 2 | 0.0 | 140 | 100 | 2.5 |
| 3 | 4.7 | 130 | 120 | 60.0 |
| 4 | 4.7 | 220 | 160 | 68.0 |
| 5 | 2.0 | 225 | 170 | 60.0 |
| 6 | 10.0 | 200 | 180 | 63.0 |

On constate d'après ces résultats que pour obtenir un support contenant de la zircone de surface spécifique identique à celle d'un catalyseur à support alumine (échantillon I) il suffit de mettre en oeuvre la présente invention, ici les échantillons 4, 5 et 6. La préparation de supports zircone seule ou zircone/yttrium par la technique dite des sels fondus ne permet pas d'atteindre de telles surfaces.

En outre, on constate une meilleure stabilité thermique de la zircone en mélange avec les métaux revendiqués par l'invention que la zircone préparée seule par la technique des sels fondus.

### EXEMPLE II

Le présent exemple vise à montrer la supériorité des catalyseurs à base de molybdène selon l'invention au cours de l'hydrotraitement du thiophène.

On a donc testé les échantillons suivants :
- l'échantillon 1 correspondant à un support d'alumine imprégné de molybdène, comme décrit dans l'exemple I ;
- l'échantillon 7 correspondant à l'échantillon 2 de l'exemple I qui a été imprégné par une solution d'heptamolybdate d'ammonium de façon à obtenir une concentration finale de molybdène dans le catalyseur de 6 % ;
- l'échantillon 4 correspondant à un catalyseur selon l'invention sans imprégnation complémentaire par un sel de molybdène, décrit dans l'exemple I ;
- l'échantillon 8 correspondant à l'échantillon 4 de l'exemple I qui a été imprégné par une solution d'heptamolybdate d'ammonium de façon à obtenir une concentration finale de molybdène dans le catalyseur de 8 % ;
- et l'échantillon 9 correspondant à l'échantillon imprégné comme l'échantillon 8, mais dont la concentration finale en molybdène est de 12,7%.

Tous ces échantillons ont été sulfurés dans une atmosphère hydrogène/hydrogène sulfuré (H₂/H₂S) à 400°C pendant 4 heures, puis ont été testés pour hydrodésulfurer du thiophène à 300°C sous pression atmosphérique, afin de mesurer leur activité catalytique. Les résultats sont rassemblés dans le tableau II ci-après :

**TABLEAU II**

| **ECHANTILLON N°** | **% en poids de Mo** | **ACTIVITE (10**^{**8**}**mol/s.g)** |
|---|---|---|
| 1 | 9.3 | 12 |
| 7 | 6.0 | 15 |
| 4 | 4.7 | 16 |
| 8 | 8.0 | 24 |
| 9 | 12.7 | 28 |

On constate que les catalyseurs selon l'invention avec ou sans imprégnation par du molybdène (échantillons 4, 8 et 9) ont une activité au moins égale sinon supérieure aux catalyseurs à support d'alumine et cela même pour une teneur en molybdène très inférieure (échantillon 4 comparé à l'échantillon 1).

### EXEMPLE III

Le présent exemple compare les résultats obtenus en hydrodésulfurant du thiophène en présence de catalyseurs contenant des phases actives nickel/molybdène sulfurées préparées conventionnellement et selon le procédé de l'invention par la méthode dite des sels fondus.

Trois échantillons de catalyseur ont été préparés:
- l'échantillon 10 est constitué d'un support correspondant à l'échantillon 4 selon l'invention, qui a été imprégné successivement par une solution d'heptamolybdate d'ammonium puis par une solution de nitrate de nickel pour obtenir des concentrations finales par rapport au catalyseur de 8,7 % en poids de molybdène et de 3,5 % en poids de nickel ;
- l'échantillon 11 est constitué par un support obtenu comme dans l'échantillon 4 mais en substituant à l'heptamolybdate d'ammonium un mélange équiatomique d'heptamolybdate d'ammonium et de nitrate de nickel (rapport molaire Ni/Mo=1), ledit support étant imprégné ultérieurement comme dans l'échantillon 4 par une solution d'heptamolybdate d'ammonium; les concentrations finales par rapport au catalyseur sont de 12,7 % en poids de molybdène et 5,2 % en poids de nickel ;
- l'échantillon 12 est un catalyseur industriel d'hydrotraitement comprenant une phase active mixte nickel/molybdène sulfurée sur un support alumine, appelé HR346 et commercialisé par PROCATALYSE.

Comme dans l'exemple II, les échantillons 10 et 11 ont été sulfurés avant d'être testés en hydrotraitement.
Les résultats catalytiques sont rassemblés dans le tableau III ci-après.

**TABLEAU III**

| **ECHANTILLON** | **ACTIVITE (10**^{**8**}**mol/s.g)** |
|---|---|
| 10 | 180 |
| 11 | 250 |
| 12 | 160 |

Bien que les préparations des échantillons 10 et 11 n'aient pas été optimisées, ils présentent une activité catalytique au moins égale sinon très supérieure (voir l'échantillon 11) à celle d'un catalyseur commercial (échantillon 12).

### EXEMPLE IV

Le présent exemple compare l'activité catalytique de l'échantillon 11 selon l'invention à celle du catalyseur commercial ou échantillon 12 au regard de l'hydrogénation de la tétraline.

Le test catalytique est opéré à 350°C sous une pression totale de 40 bars, sous une atmosphère d'hydrogénation contenant 1,5% d'hydrogène sulfuré (H₂S), le débit de tétraline étant de 165 ml/min sur le catalyseur testé.

On constate que l'activité de l'échantillon 11 (10x10⁸ mol/s.g) est très supérieure à celle du catalyseur commercial (échantillon 12, 5,8x10⁸mol/s.g), ce qui confirme la supériorité des catalyseurs selon l'invention comparés aux catalyseurs commerciaux usuellement utilisés dans l'industrie.

## Revendications

1. Catalyseur comprenant au moins un oxyde de zirconium caractérisé en ce qu'il est constitué pour au moins 85% de son poids par un support thermiquement stable de surface spécifique supérieure ou égale à 150 m²/g contenant de 60 à 99% en poids d'au moins un oxyde de zirconium et de 40 à 1% en poids d'au moins un oxyde métallique d'au moins un métal (Me) choisi dans le groupe constitué par les métaux des groupes V, VI et VII, l'uranium et les métaux nobles tels que le ruthénium, l'osmium, le rhodium, l'iridium, et éventuellement au moins un des éléments phosphore, arsenic et soufre, en ce que le support est obtenu en une seule phase de réaction consistant :
**i)** à introduire le mélange de sels de zirconium et d'au moins un autre métal dans une composition eutectique de nitrates ou de sulfates alcalins ;
**ii)** à déshydrater le mélange ainsi obtenu sous atmosphère inerte entre 80 et 200°C pendant de 30 minutes à 3 heures ;
**iii)** puis à maintenir ledit mélange à une température comprise entre 250 et 550°C pendant de 30 minutes à 5 heures ;
**iiii)** et enfin à isoler le support ainsi formé par lavage à l'eau des sels alcalins oxydants et filtration simultanée des cristaux.

2. Catalyseur selon la revendication 1, caractérisé en ce que le rapport atomique métal/zirconium (Me/Zr) dans le support est compris entre 0,02 et 0,20.

3. Catalyseur selon l'une des revendications 1 et 2, caractérisé en ce que son support comprend conjointement à au moins un oxyde de zirconium, au moins un oxyde mixte du type oxométallate métallique, le métal du groupement oxométallate appartenant au groupe constitué par les métaux des groupes V, VI et VII, l'uranium et les métaux nobles tels que le ruthénium, l'osmium, le rhodium, l'iridium, et le métal de l'espèce métallique appartenant au groupe constitué par le fer, le cobalt, le nickel et le bismuth.

4. Catalyseur selon la revendication 3 caractérisé en ce qu'il est obtenu par introduction dans le mélange eutectique d'un sel métallique d'au moins un deuxième métal du groupe constitué par le fer, le nickel, le cobalt et le bismuth.

5. Catalyseur selon l'une des revendications de 1 à 2, caractérisé en ce que le rapport atomique (Me/Zr) est compris entre 0,02 et 0,1 dans le support et de préférence entre 0,05 et 0,08 lorsque le métal (Me) provient d'un oxyde métallique simple.

6. Catalyseur selon l'une des revendications 1 à 5, caractérisé en ce que les oxydes métalliques préférés associés aux oxydes de zirconium dans le support sont des oxydes de métaux choisis dans le groupe constitué par le molybdène, le vanadium, le tungstène, le niobium et le chrome.

7. Catalyseur selon l'une des revendications de 1 à 3, caractérisé en ce que l'oxyde mixte préféré, associé aux oxydes de zirconium dans le support, est un oxométallate choisi dans le groupe constitué par le molybdate, le vanadate, le niobate, le chromate et le tungstate, d'au moins un métal choisi dans le groupe constitué par le fer, le cobalt, le nickel et le bismuth.

8. Catalyseur selon l'une des revendications 1 à 7, caractérisé en ce qu'il est constitué par le support constitué de cristallites catalytiquement actives.

9. Catalyseur selon l'une des revendications de 1 à 7, caractérisé en ce qu'il comprend de 0 à 15 % en poids d'au moins un métal imprégné sur son support, ledit métal appartenant au groupe constitué par les groupes V, VI et VII, l'uranium, les métaux nobles tels que le ruthénium, le rhodium, l'osmium, l'iridium et les métaux de transition et éventuellement des éléments du groupe phosphore, arsenic et soufre.

10. Catalyseur selon la revendication 9, caractérisé en ce que le rapport atomique métal/zirconium maximal dans le catalyseur est de 0,25.

11. Catalyseur selon l'une des revendications 9 et 10 caractérisé en ce que les métaux préférés imprégnés sur le support sont choisis dans le groupe constitué par le molybdène, le vanadium, le tungstène, les métaux de transition et le bismuth.

12. Application du catalyseur selon la revendication 1 dans les procédés d'hydrotraitement d'hydrocarbures.

13. Application du catalyseur selon la revendication 1 dans les procédés d'oxydation.

## Claims

1. Catalyst comprising at least one zirconium oxide, characterized in that at least 85% of its weight consists of a thermally stable support with a specific surface area which is greater than or equal to 150 m²/g and containing between 60 and 99 weight % of at least one zirconium oxide and between 40 and 1 weight % of at least one metallic oxide of at least one metal (Me) selected from the group comprising the metals of groups V, VI and VII, uranium and noble metals such as ruthenium, osmium, rhodium, iridium, and possibly at least one of the elements phosphorus, arsenic and sulphur; and in that the support is obtained in a single reaction phase consisting in:
i) introducing the mixture of zirconium salts and at least one other metal into an eutectic composition of alkaline sulphates or nitrates;
ii) dehydrating the resultant mixture in an inert atmosphere at between 80 and 200°C for between 30 minutes and 3 hours;
iii) then maintaining the mixture at a temperature of between 250 and 550°C for between 30 minutes and 5 hours;
iv) and finally isolating the resultant support by washing the oxidizing alkali salts with water and simultaneously filtering the crystals.

2. Catalyst according to Claim 1, characterized in that the metal/zirconium atomic ratio (Me/Zr) in the support is between 0.02 and 0.20.

3. Catalyst according to either of Claims 1 and 2, characterized in that its support comprises together with at least one zirconium oxide at least one mixed oxide of the metallic oxometallate type, the metal of the oxometallate group belonging to the group comprising the metals of groups V, VI and VII, uranium and the noble metals such as ruthenium, osmium, rhodium, iridium, and the metal of the metallic type belonging to the group comprising iron, cobalt, nickel and bismuth.

4. Catalyst according to Claim 3, characterized in that it is obtained by introducing into the eutectic mixture a metallic salt of at least one second metal of the group comprising iron, nickel, cobalt and bismuth.

5. Catalyst according to either of Claims 1 and 2, characterized in that the atomic ratio (Me/Zr) is between 0.02 and 0.1 in the support and preferably between 0.05 and 0.08 when the metal (Me) originates from a simple metallic oxide.

6. Catalyst according to any one of Claims 1 to 5, characterized in that the preferred metallic oxides associated with the zirconium oxides in the support are oxides of metals selected from the group comprising molybdenum, vanadium, tungsten, niobium and chromium.

7. Catalyst according to any one of Claims 1 to 3, characterized in that the preferred mixed oxide, associated with the zirconium oxides in the support, is an oxometallate selected from the group comprising molybdate, vanadate, niobate, chromate and tungstate of at least one metal selected from the group comprising iron, cobalt, nickel and bismuth.

8. Catalyst according to any one of Claims 1 to 7, characterized in that it consists of the support comprising catalytically active crystallites.

9. Catalyst according to any one of Claims 1 to 7, characterized in that it comprises between 0 and 15 weight % of at least one metal impregnated on its support, the metal belonging to the group comprising groups V, VI and VII, uranium, the noble metals such as ruthenium, rhodium, osmium, iridium and the transition metals and optionally elements of the group comprising phosphorus, arsenic and sulphur.

10. Catalyst according to Claim 9, characterized in that the maximum metal/zirconium atomic ratio in the catalyst is 0.25.

11. Catalyst according to any either of Claims 9 and 10, characterized in that the preferred metals impregnated on the support are selected from the group comprising molybdenum, vanadium, tungsten, the transition metals and bismuth.

12. Use of the catalyst according to Claim 1 in hydrocarbon hydroprocessing processes.

13. Use of the catalyst according to Claim 1 in oxidation processes.

## Patentansprüche

1. Katalysator, der wenigstens ein Zirconiumoxid umfaßt, dadurch **gekennzeichnet**, daß er wenigstens zu 85 % seines Gewichts aus einem wärmebeständigen Träger mit einer spezifischen Oberfläche von 150 m²/g oder darüber besteht, der 60 bis 99 Gew.-% wenigstens eines Zirconiumoxids und 40 bis 1 Gew.-% wenigstens eines Metalloxids zumindest aus einem Metall (Me), ausgewählt aus der Gruppe, bestehend aus Metallen der Gruppen V, VI und VII, Uran und Edelmetallen wie Ruthenium, Osmium, Rhodium und Iridium, und gegebenenfalls wenigstens eines der Elemente Phosphor, Arsen und Schwefel enthält, und daß der Träger in einer einzigen Reaktionsstufe erhalten wird, die folgendes umfaßt:
i) Einarbeitung eines Gemisches aus Salzen von Zirconium und wenigstens eines anderen Metalls in ein eutektisches Gemisch aus Alkalinitraten oder -sulfaten;
ii) Dehydratisierung des auf diese Weise erhaltenen Gemisches unter Inertatmosphäre zwischen 80 und 200°C während 30 Minuten bis 3 Stunden;
iii) anschließendes Halten des Gemisches bei einer Temperatur zwischen 250 und 550°C während 30 Minuten bis 5 Stunden und
iiii) abschließende Abtrennung des auf diese Weise gebildeten Trägers von den oxidierenden Alkalisalzen durch Waschen mit Wasser und gleichzeitige Filtration der Kristalle.

2. Katalysator nach Anspruch 1, dadurch **gekennzeichnet**, daß das Atomverhältnis Metall : Zirconium im Träger zwischen 0,02 und 0,20 liegt.

3. Katalysator nach einem der Ansprüche 1 und 2, dadurch **gekennzeichnet**, daß sein Träger neben wenigstens einem Zirconiumoxid wenigstens ein gemischtes Oxid vom Metalloxometallat-Typ umfaßt, wobei das Metall der Oxometallatgruppierung zur Gruppe, bestehend aus den Metallen der Gruppen V, VI und VII, Uran und Edelmetallen wie Ruthenium, Osmium, Rhodium und Iridium, und das Metall des Metallanteils zur Gruppe, bestehend aus Eisen, Cobalt, Nickel und Bismut, gehören.

4. Katalysator nach Anspruch 3, dadurch **gekennzeichnet**, daß er durch Einarbeitung eines Metallsalzes mit wenigstens einem zweiten Metall der Gruppe, bestehend aus Eisen, Nickel, Cobalt und Bismut, in das eutektische Gemisch erhalten wird.

5. Katalysator nach einem der Ansprüche 1 und 2, dadurch **gekennzeichnet**, daß das Atomverhältnis (Me:Zr) im Träger 0,02 bis 0,1 und vorzugsweise 0,05 bis 0,08 beträgt, wenn das Metall (Me) aus einem einfachen Metalloxid stammt.

6. Katalysator nach einem der Ansprüche 1 bis 5, dadurch **gekennzeichnet**, daß die bevorzugten, im Träger mit den Zirconiumoxiden verbundenen Metalloxide solche sind, ausgewählt aus der Gruppe, bestehend aus Molybdän, Vanadium, Wolfram, Niob und Chrom.

7. Katalysator nach einem der Ansprüche 1 bis 3, dadurch **gekennzeichnet**, daß das bevorzugte, mit den Zirconiumoxiden im Träger verbundene gemischte Oxid ein Oxometallat, ausgewählt aus der Gruppe, bestehend aus Molybdat, Vanadat, Niobat, Chromat und Wolframat, mit wenigstens einem Metall, ausgewählt aus der Gruppe, bestehend aus Eisen, Cobalt, Nickel und Bismut, ist.

8. Katalysator nach einem der Ansprüche 1 bis 7, dadurch **gekennzeichnet**, daß er aus dem aus katalytisch aktiven Kristalliten gebildeten Träger besteht.

9. Katalysator nach einem der Ansprüche 1 bis 7, dadurch **gekennzeichnet**, daß er wenigstens zu 0 bis 15 Gew.-% ein Metall, mit dem seine Trägeroberfläche getränkt ist, wobei dieses Metall zur Gruppe, bestehend aus den Gruppen V, VI und VII, Uran, Edelmetallen wie Ruthenium, Osmium, Rhodium und Iridium und Übergangsmetallen, gehört, und gegebenenfalls Elemente der Gruppe Phosphor, Arsen und Schwefel enthält.

10. Katalysator nach Anspruch 9, dadurch **gekennzeichnet**, daß das maximale Atomverhältnis Metall : Zirconium im Katalysator 0,25 beträgt.

11. Katalysator nach einem der Ansprüche 9 und 10, dadurch **gekennzeichnet**, daß die bevorzugten Metalle, mit denen die Trägeroberfläche getrankt ist, aus der Gruppe, bestehend aus Molybdän, Vanadium, Wolfram, Übergangsmetallen und Bismut, ausgewählt sind.

12. Verwendung des Katalysators nach Anspruch 1 bei Verfahren zur Hydrierung von Kohlenwasserstoffen.

13. Verwendung des Katalysators nach Anspruch 1 bei Oxidationsverfahren.
